# EUROPEAN PATENT SPECIFICATION

(11) **EP 1 565 029 B1**
(45) Date of publication and mention of the grant of the patent: **26.03.2008**
(21) Application number: 05250618.5
(22) Date of filing: 04.02.2005
(51) Int. Cl.: H04Q 7/38

(54) **Parameter control of an access request depending of the quality of service requested**
Parameterkontrolle einer Zugriffsanforderung abhängig von der angeforderten Dienstqualität
Contrôle des paramètres d'une demande d'accès dépendant de la qualité de service demandée

(30) Priority: 12.02.2004 JP 2004035006
(43) Date of publication of application: 17.08.2005
(73) Proprietor: NTT DoCoMo, Inc., Tokyo 100-6150 (JP)
(72) Inventor: Tanno, Motohiro c/o Intellectual Property Dep., 2-chome Chiyoda-ku Tokyo 100-6150 (JP); Iizuka, Yousuke c/o Intellectual Property Dep., 2-chome Chiyoda-ku Tokyo 100-6150 (JP); Sawahashi, Mamoru c/o Intellectual Property Dep., 2-chome Chiyoda-ku Tokyo 100-6150 (JP)
(74) Representative: Maury, Richard Philip

(56) References cited:
- US-A1- 2002 187 789
- US-A1- 2003 026 324

## Description

### BACKGROUND OF THE INVENTION

### 1. Field of the Invention

### [Field of the Invention]

The present invention generally relates to a mobile station and base station that constitute a mobile communications system.

### 2. Description of the Related Art

### [Background of the Invention]

IMT-2000 (International Mobile Telecommunication 2000), which pertains to the third generation mobile communications system, specifies maximum information transmission speeds as 144 kbps, 384 kbps, and 2 Mbps for mobile environments, walking environments, and semi-stationary environments, respectively, realizing full-scale multimedia mobile communications in addition to voice services. However, in view of the rapid spread of the Internet, versatility of information, large-capacity transmissions, and development toward the next generation Internet in recent years and continuing, there is a requirement for a wide band radio access method based on packet transmission that is capable of realizing information transmission speeds of 2 Mbps or higher in mobile communications.

Further, in next-generation (the fourth generation) mobile communications systems, requirements of communication quality of service (QoS) such as information transmission speed, transmission delay, and a permissible residual error rate are expected to become diverse. For example, in the case of voice and image traffic, real-time transmission is often required, where a transmission delay and fluctuation thereof between a transmitting side and a receiving side produce degradation of the communication quality. Accordingly, the transmission delay and transmission fluctuation have to comply with requirements of each user and each category of data traffic. On the other hand, in the case of file transfer traffic, like WWW (World Wide Web) browsing, non-real-time transmission is sufficient, while an error-free and high-throughput transmission is required.

Thus, in order to maximize system capacity, while filling various communication quality requirements in the next-generation mobile communications system, it is necessary to provide various radio parameters that reflect the versatile communication quality requirements of transmission data packets.

By the way, according to the W-CDMA (Wideband Code Division Multiple Access) method, which is included in the IMT-2000, a random access method based on a slotted ALOHA is used in the uplink that goes from a mobile station to a base station. According to the random access method, call origination and reservation control is performed before long packet transmission, so that a discrete short packet from a mobile station is transmitted by a random access channel (RACH). Specifically, the mobile station transmits a preamble, which is a short signal that is a spread spectrum signal spread by a predetermined spreading code, in advance of data packet transmission that contains an information symbol sequence. Here, the mobile station transmits until the base station detects the preamble, or until the number of times of transmission reaches a predetermined number. The base station transmits an acknowledgement signal when the preamble is detected. Then, the mobile station transmits the data packet only after the acknowledgement signal is received.

Further, a technology that determines the speech path quality between a mobile station and a base station is disclosed by Patent Reference 1.
[Patent Reference 1] JPA 10-98437

### [Problem(s) to be solved by the Invention]

In the wide band radio access method wherein all transmissions in radio units are served by packet transmission such as Internet accesses, traffic demands increase in bursts. For this reason, the importance of random access increases, and an efficient random access method that can accommodate versatile communication quality requirements becomes important.

However, according to the conventional random access method represented by RACH of the W-CDMA method mentioned above, radio parameter control does not take the communication quality requirements into consideration. For this reason, if a system is to serve a mixture of users (data) requiring high communication quality, and users (data) requiring relatively looser quality, the system cannot simultaneously satisfy both categories of users. That is, if the radio parameters are set for the high quality users (data), the system capacity is decreased beyond necessity. On the other hand, if the radio parameters are set for the other sector of users, maximizing the system capacity, the users wanting high quality services cannot be satisfied. This type of the problem will become increasingly remarkable as the communication quality requirements become diversified.

US2003/0187789 discloses a system in which the access request sent in a RACH contains information concerning the quality of service of the channel requested. The difference with claim 1 is that in claim 1 a radio parameter of the access request is determined depending of the quality required by the access request. In US2003/0187789, the radio parameters used to transmit the access request itself are not indicated as being different for different quality of service required.

The invention provides a mobile station as defined in Claim 1.

The present invention can provide a mobile station with a high system capacity, while satisfying versatile communication quality requirements, and can substantially overcome one or more of the problems caused by the limitations and disadvantages of the related art.

As described above, according to the present invention, the mobile station controls the radio parameter when transmitting the request signal requesting the communication to the base station according to required communication quality.

Therefore, the radio parameter can be suitably set according to the required communication quality, while satisfying versatile communication quality, and keeping the system capacity.

### BRIEF DESCRIPTION OF THE DRAWINGS

Fig. 1 is a block diagram showing an example structure of a mobile communications system;
Fig. 2 is a sequence diagram showing operations of the mobile communications system according to the first embodiment of the present invention;
Fig. 3 is a sequence diagram showing operations of the mobile communications system according to the second embodiment of the present invention;
Fig. 4 is the sequence diagram showing operations of the mobile communications system according to the third embodiment of the present invention;
Fig. 5 gives graphs showing examples of transmission power of a request signal according to the third embodiment of the present invention;
Fig. 6 is a sequence diagram showing operations of the mobile communications system according to the fourth embodiment of the present invention;
Fig. 7 is a sequence diagram showing operations of the mobile communications system according to the fifth embodiment of the present invention;
Fig. 8 is a sequence diagram showing operations of the mobile communications system according to the sixth embodiment of the present invention;
Fig. 9 is a sequence diagram showing operations of the mobile communications system according to the seventh embodiment of the present invention;
Fig. 10 is a sequence diagram showing operations of the mobile communications system according to the eighth embodiment of the present invention;
Fig. 11 is gives graphs showing examples of the transmission power of the data packet according to the eighth embodiment of the present invention;
Fig. 12 is a sequence diagram showing operations of the mobile communications system according to the ninth embodiment of the present invention; and
Fig. 13 is a map showing a structure example of the request signal according to the ninth embodiment of the present invention.

### DESCRIPTION OF THE PREFERRED EMBODIMENTS

In the following, embodiments of the present invention are described with reference to the accompanying drawings.

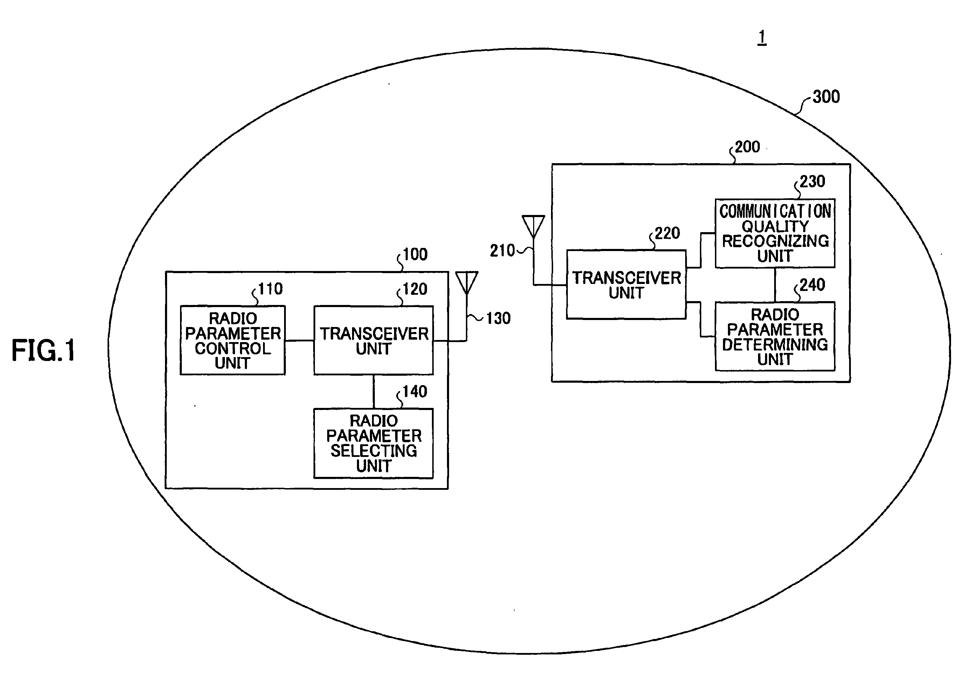

Fig. 1 is a block diagram showing a structure example of a mobile communications system 1 concerning the embodiments. The mobile communications system 1 includes a base station 200 that constitutes a cell 300, and a mobile station 100 that is present in the cell 300. The mobile station 100 includes a radio parameter control unit 110, a transceiver unit 120, an antenna 130, and a radio parameter selecting unit 140. The base station 200 includes an antenna 210, a transceiver unit 220, a communication quality recognizing unit 230, and a radio parameter determining unit 240. Hereafter, operations of the mobile communications system 1 are explained.

### (The first embodiment of the present invention)

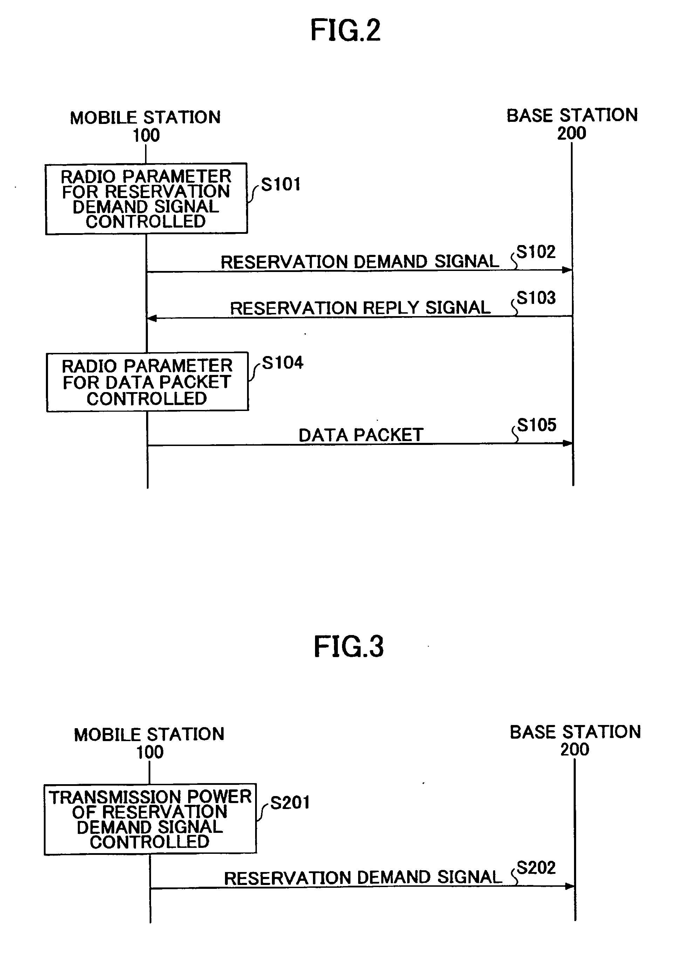

Fig. 2 is a sequence diagram showing operations of the mobile communications system 1 according to the first embodiment of the present invention. The radio parameter control unit 110 of the mobile station 100 controls a radio parameter for reservation request signal transmission, and requests communication with the base station 200, in advance of transmitting a data packet, according to communication quality required by the data packet transmission (Step S101). At this time, the radio parameter control unit 110 of the mobile station 100 controls the radio parameter such that the system capacity is maximized, while satisfying the communication quality required by the data packet transmission.

Next, the transceiver unit 120 of the mobile station 100 transmits the reservation request signal, for which the radio parameter is controlled, to the base station 200 through the antenna 130. The transceiver unit 220 of the base station 200 receives the reservation request signal through the antenna 210 (Step S102). Then, the transceiver unit 220 of the base station 200 transmits a reservation reply signal to the mobile station 100 through the antenna 210 in response to the received reservation request signal. The reservation reply signal contains information about transmitting timing of the data packet of the mobile station 100. The transceiver unit 120 of the mobile station 100 receives the reservation reply signal through the antenna 130 (Step S103). In addition, if the reservation reply signal is not received within a predetermined period after transmitting the reservation request signal, the transceiver unit 120 of the mobile station 100 retransmits the reservation request signal.

The radio parameter control unit 110 of the mobile station 100 controls the radio parameter for data packet transmission according to the communication quality required by the data packet transmission, when the transceiver unit 120 receives the reservation reply signal (Step S104). At this time, as at Step S101, the radio parameter control unit 110 of the mobile station 100 controls the radio parameter such that the system capacity is maximized, while satisfying the communication quality required by the data packet transmission.

Next, the transceiver unit 120 of the mobile station 100 transmits the data packet, for which the radio parameter is controlled, to the base station 200 through the antenna 130. At this time, based on the information about the transmitting timing contained in the reservation reply signal received at Step S103, the transceiver unit 120 of the mobile station 100 recognizes the transmitting timing, and transmits the data packet based on the recognized transmitting timing. The transceiver unit 220 of the base station 200 receives the data packet through the antenna 210 (Step S105).

As described above, according to the present embodiment, the mobile station 100 controls the radio parameters for the reservation request signal transmission and the data packet transmission such that the system capacity is maximized, while satisfying the communication quality required by the data packet transmission. Accordingly, the system capacity is maximized, while satisfying the communication quality required of every data packet.

### (The second embodiment of the present invention)

Fig. 3 is a sequence diagram showing operations of the mobile communications system 1 according to the second embodiment of the present invention. Here, the radio parameter control unit 110 of the mobile station 100 controls transmission power as the radio parameter for the reservation request signal transmission according to the communication quality required by the data packet transmission in advance of the data packet transmission (Step S201). Specifically, the radio parameter control unit 110 of the mobile station 100 sets up the transmission power of a sufficient magnitude such that the base station 200 can receive the reservation request signal, when the communication quality required by data packet transmission is high (for example, the delay time should be short, a residual packet error rate should be small, etc.). In this case, since the probability of the base station 200 receiving the reservation request signal increases, packet loss is reduced and delay time is shortened. To the contrary, when the communication quality required by the data packet transmission is low (for example, the delay time can be long, the residual packet error rate may be high, etc.), the radio parameter control unit 110 of the mobile station 100 sets up the smallest possible transmission power at which the base station 200 can receive the reservation request signal. In this case, although the probability that the reservation request signal is not received by the base station 200 increases, and the probability of packet loss and long delay time increases, the transmission power is small, which reduces interference received by other mobile stations (not shown), and increases the system capacity.

Next, the transceiver unit 120 of the mobile station 100 transmits the reservation request signal, transmission power of which is controlled, to the base station 200 through the antenna 130. The transceiver unit 220 of the base station 200 receives the reservation request signal through the antenna 210 (Step S202).

### (The third embodiment of the present invention)

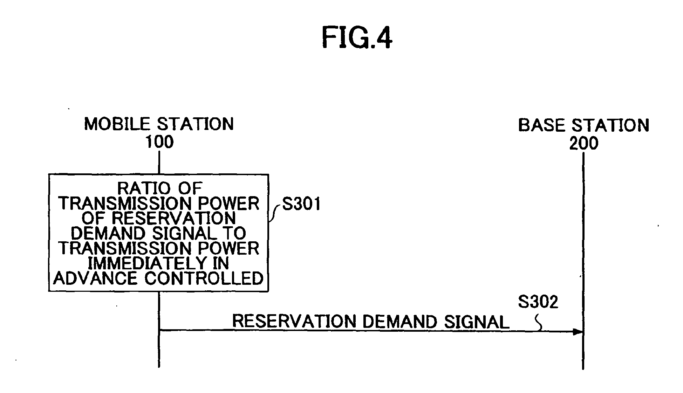

Fig. 4 is a sequence diagram showing operations of the mobile communications system 1 according to the third embodiment of the present invention. The radio parameter control unit 110 of the mobile station 100 controls the ratio of the transmission power of the reservation request signal to the transmission power of a signal transmitted immediately before the reservation request signal according to the communication quality required by the data packet transmission in advance of the data packet transmission (Step S301).

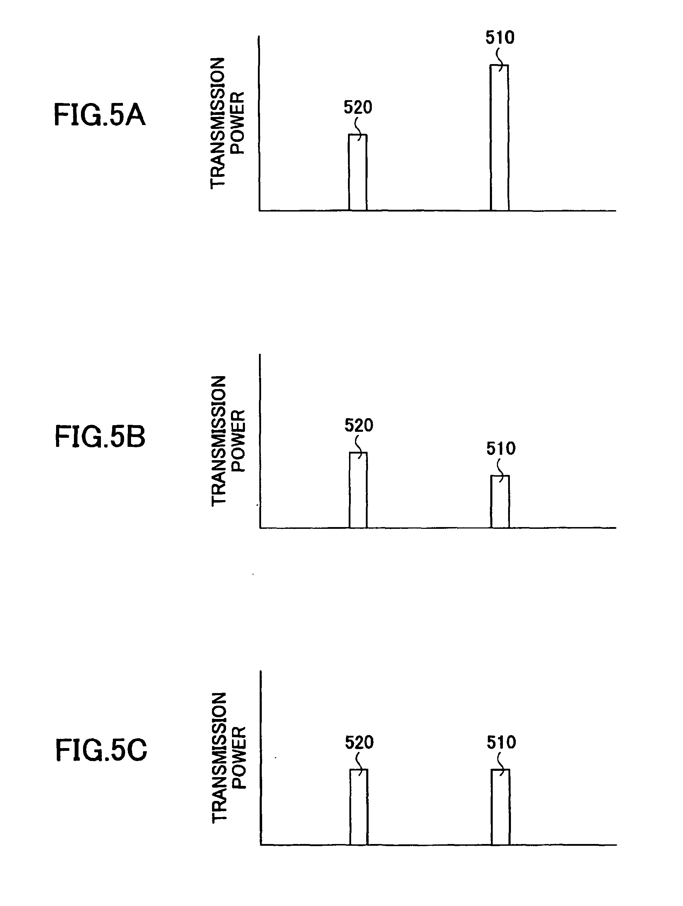

Fig. 5 gives graphs showing examples of the transmission power of the reservation request signal. When the communication quality required by data packet transmission is high, the radio parameter control unit 110 of the mobile station 100 increases transmission power 510 of the reservation request signal in reference to transmission power 520 of a signal that is transmitted immediately before as shown at (a) of Fig. 5. In this case, since the probability of reception by the base station 200 of the reservation request signal increases, packet loss is reduced and delay time is shortened. On the other hand, when the communication quality required by the data packet transmission is relatively low, the radio parameter control unit 110 of the mobile station 100 decreases the transmission power 510 of the reservation request signal in reference to the transmission power 520 of the signal that is transmitted immediately before as shown at (b) of Fig. 5., or alternatively, as shown at (c) of Fig. 5, the transmission power 520 of the reservation request signal is made equal to the transmission power 510. In this case, the probability of causing packet loss and increasing the delay time increases, since the probability that the reservation request signal is not received by the base station 200 increases. However, since the transmission power is small, interference received by other mobile stations (not shown) is reduced, and the system capacity can be increased.

Next, with reference to Fig. 4 again, the transceiver unit 120 of the mobile station 100 transmits the reservation request signal, the transmission power of which is controlled, to the base station 200 through the antenna 130. The transceiver unit 220 of the base station 200 receives the reservation request signal through the antenna 210 (Step S302).

### (The fourth embodiment of the present invention)

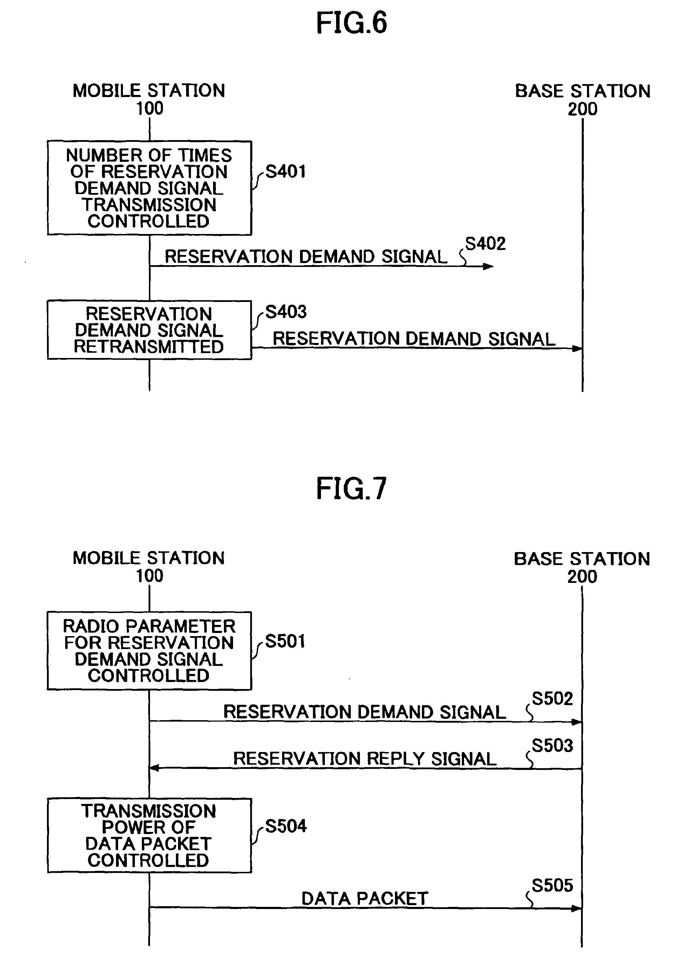

Fig. 6 is a sequence diagram showing operations of the mobile communications system 1 according to the fourth embodiment of the present invention. The radio parameter control unit 110 of the mobile station 100 controls a predetermined number of times of transmitting a radio parameter corresponding to a reservation request signal according to the communication quality required by the data packet transmission in advance of the data packet transmission (Step S401). Specifically, the radio parameter control unit 110 of the mobile station 100 sets up a small number of times, when the communication quality required by the data packet transmission is high. On the other hand, the radio parameter control unit 110 of the mobile station 100 sets up a great number of times, when the communication quality required by the data packet transmission is low.

Then, the transceiver unit 120 of the mobile station 100 transmits the reservation request signal, the number of times of transmission of which is controlled, through the antenna 130 (Step S402). If the base station 200 does not properly receive the reservation request signal, a reservation reply signal is not transmitted. Accordingly, the transceiver unit 120 of the mobile station 100 does not receive a reservation reply signal. If the reservation reply signal is not received within a predetermined period, the mobile station 100 recognizes that the base station 200 has not properly received the reservation request signal, and then re-transmits the reservation request signal until the predetermined number of times of transmission is reached (Step S403). When the communication quality required by data packet transmission is set high, i.e., the number of times of transmission is set small, the delay time is shortened, while errors in receiving or packet discarding of the reservation request signal by the base station 200 are permitted to some extent. On the other hand, when the communication quality required by the data packet transmission is set low, i.e., the number of times of transmission is great, the required communication quality can be satisfied by the base station 200 properly receiving the reservation request signal through the increased number of times of transmission, and the mobile station 100 assembling packets of the reservation request signal.

### (The fifth embodiment of the present invention)

Fig. 7 is a sequence diagram showing operations of the mobile communications system 1 according to the fifth embodiment of the present invention. Since Steps S501 through S503 in Fig. 7 are the same as Steps S101 through S103, respectively, in Fig. 2 of the first embodiment, explanations thereof are not repeated.

The radio parameter control unit 110 of the mobile station 100 controls the transmission power as the radio parameter corresponding to the data packet transmission according to the communication quality required by the data packet transmission (Step S504). Specifically, like the control of the radio parameter corresponding to the reservation request signal in the second embodiment of the present invention, the radio parameter control unit 110 of the mobile station 100 sets the transmission power to be of a sufficient magnitude such that the base station 200 can receive the data packet, when the communication quality required by the data packet transmission is high. Accordingly, the probability of reception by the base station 200 of the data packet increases, packet loss is reduced, and the delay time is shortened. On the other hand, when the communication quality required by the data packet transmission is low, the radio parameter control unit 110 of the mobile station 100 sets up the smallest possible transmission power at which the data packet is just receivable by the base station 200. In this case, the transmission power is small, so that packet loss may be increased, and the delay time may become long since the probability that the data packet is not received by the base station 200 increases. Nevertheless, interference received by other mobile stations (not shown) is reduced, and the system capacity can be increased.

Then, the transceiver unit 120 of the mobile station 100 transmits the data packet, transmission power of which is controlled, to the base station 200 through the antenna 130. The transceiver unit 220 of the base station 200 receives the data packet through the antenna 210 (Step S505).

### (The sixth embodiment of the present invention)

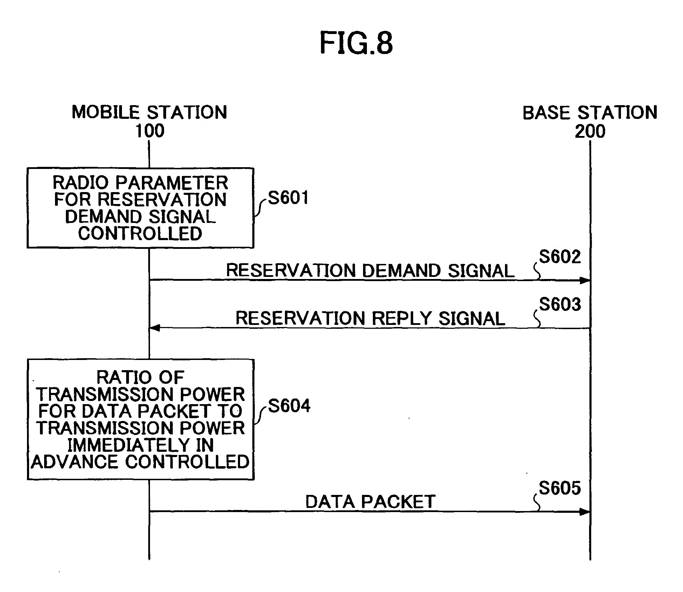

Fig. 8 is a sequence diagram showing operations of the mobile communications system 1 according to the sixth embodiment of the present invention. Since Steps S601 through S603 in Fig. 8 are the same as Steps S101 through S103, respectively, in Fig. 2 of the first embodiment, explanations thereof are not repeated.

The radio parameter control unit 110 of the mobile station 100 controls the ratio of the transmission power of the data packet to the transmission power of a data packet that is transmitted immediately before the data packet, the control being according to the communication quality required by the data packet transmission (Step S604). Specifically, like the control of the radio parameter corresponding to the reservation request signal in the third embodiment of the present invention, the radio parameter control unit 110 of the mobile station 100 increases the transmission power of the data packet in reference to the transmission power of the data packet that is transmitted immediately before, when the communication quality required by the data packet transmission is high. In this case, the probability of reception of the data packet by the base station 200 increases, packet loss is reduced, and the delay time is shortened. On the other hand, when the communication quality required by the data packet transmission is low, the radio parameter control unit 110 of the mobile station 100 sets the transmission power of the data packet smaller than the transmission power of the data packet that is transmitted immediately before, or alternatively, makes the transmission power of the data packet equal to the transmission power of the data packet that is transmitted immediately before. When the transmission power is small, although packet loss may be increased, and the time delay may become longer because the base station 200 may not receive the data packet, the interference received by other mobile stations (not shown) is reduced, and the system capacity is increased.

Next, the transceiver unit 120 of the mobile station 100 transmits the data packet, transmission power of which is controlled, to the base station 200 through the antenna 130. The transceiver unit 220 of the base station 200 receives the data packet through the antenna 210 (Step S605).

### (The seventh embodiment of the present invention)

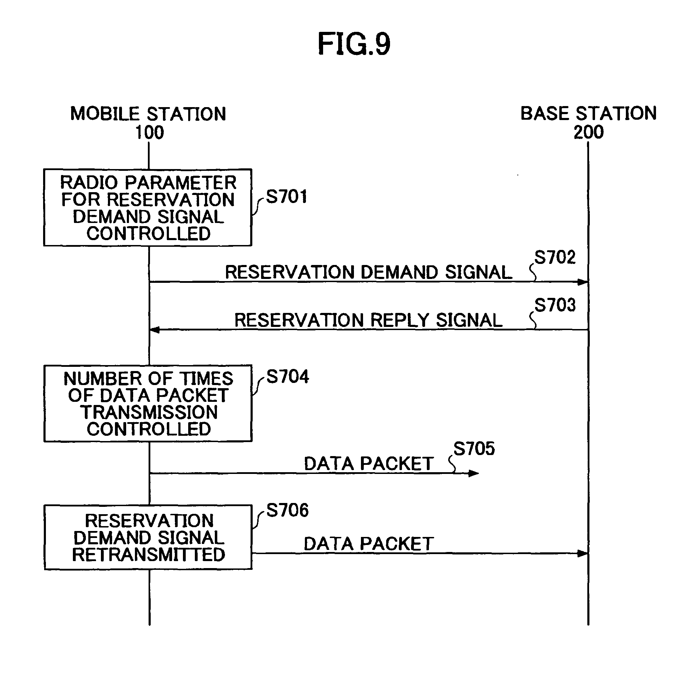

Fig. 9 is a sequence diagram showing operations of the mobile communications system 1 according to the seventh embodiment of the present invention. Since Steps S701 through S703 are the same as Steps S101 through S103, respectively, in Fig. 2 of the first embodiment of the present invention, explanations thereof are not repeated.

The radio parameter control unit 110 of the mobile station 100 controls a predetermined number of times of transmitting the radio parameter for the data packet transmission according to the communication quality required by the data packet transmission (Step S704). Specifically, like the control of the radio parameter of the reservation request signal transmission of the fourth embodiment of the present invention, the radio parameter control unit 110 of the mobile station 100 sets up a small number of times, when the communication quality required by the data packet transmission is high. On the other hand, the radio parameter control unit 110 of the mobile station 100 sets up a great number of times, when the communication quality required by the data packet transmission is low.

Then, the transceiver unit 120 of the mobile station 100 transmits the data packet, the number of times of transmission of which is controlled, through the antenna 130 (Step S705). The base station 200 does not transmit a predetermined reply signal, when the data packet is not properly received. The mobile station 100 recognizes that the base station 200 has not properly received the data packet when the predetermined reply signal is not received within a predetermined period. Then, the data packet is re-transmitted until the number of times of transmission reaches the predetermined number of times (Step S706).

### (The eighth embodiment of the present invention)

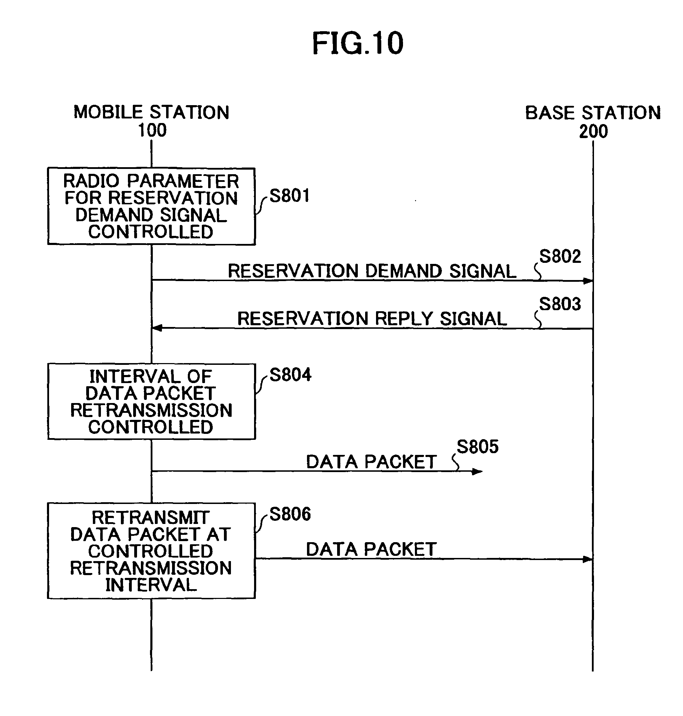

Fig. 10 is a sequence diagram showing operations of the mobile communications system 1 according to the eighth embodiment of the present invention. Since Steps S801 through S803 are the same as Steps S101 through S103, respectively, in Fig. 2 of the first embodiment, explanations thereof are not repeated.

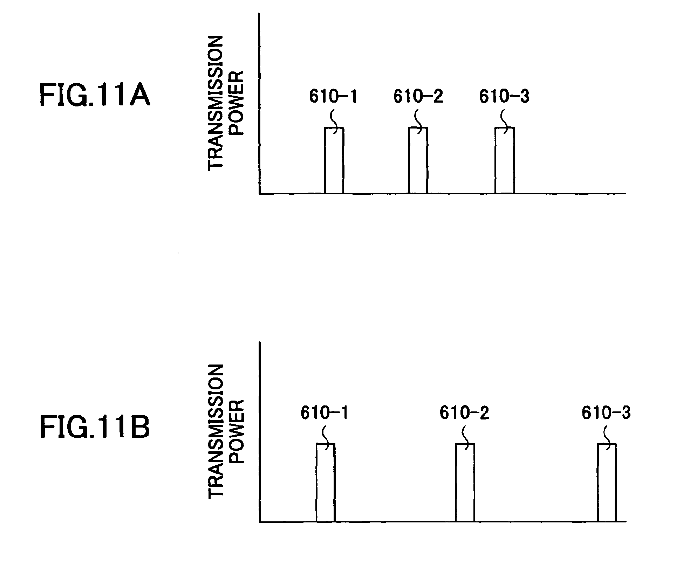

The radio parameter control unit 110 of the mobile station 100 controls a re-transmitting interval as the radio parameter of the data packet transmission according to the communication quality required by the data packet transmission (Step S804). Specifically, when the communication quality required by the data packet transmission is high, the radio parameter control unit 110 of the mobile station 100 shortens the re-transmitting interval as shown at (a) of Fig. 11, and takes a longer re-transmitting interval as shown at (b) of Fig. 11, when the communication quality required by the data packet transmission is low.

Then, the transceiver unit 120 of the mobile station 100 transmits the data packet, re-transmitting interval of which is controlled, through the antenna 130 (Step S805). The base station 200 does not transmit a predetermined reply signal, when the data packet is not properly received. If the predetermined reply signal is not received after lapse of a predetermined period, the transceiver unit 120 of the mobile station 100 determines that the base station 200 has not properly received the data packet, and the data packet is transmitted again at the re-transmitting interval controlled by Step S804 (Step S806).

When the communication quality required by the data packet transmission is high, a short re-transmitting interval is set up such that the delay time can be made short, satisfying a predetermined error rate. On the other hand, when the communication quality required by the data packet transmission is low, a long re-transmitting interval is set up long such that the transmission power required in order to satisfy a predetermined error rate can be made small by an increased time diversity effect.

In the fifth through the eighth embodiments of the present invention, the radio parameter of the mobile station 100 is served by controlling
the transmission power,
the ratio of the data packet transmission power to the power of data packet transmission immediately before,
the number of retransmission times of the data packet, and
the retransmission interval of the data packet.

Nevertheless, other factors can serve the purpose, for example, a rate of error-correcting-code generation, a modulation technique, and the number of multi-codes.

### (The ninth embodiment of the present invention)

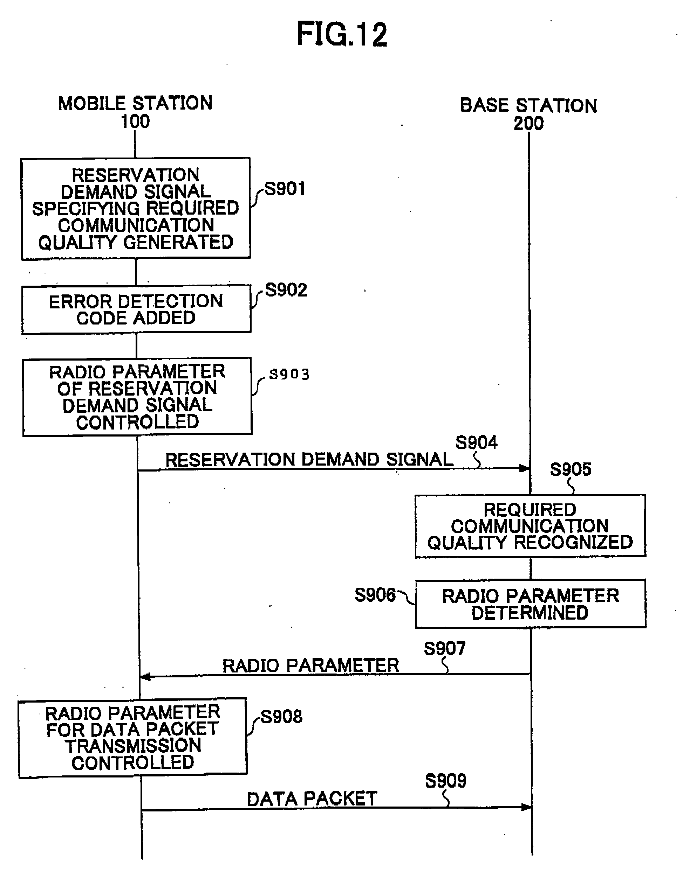

Fig. 12 is a sequence diagram showing operations of the mobile communications system 1 according to the ninth embodiment of the present invention. The transceiver unit 120 of the mobile station 100 generates a reservation request signal that specifies the communication quality required by the data packet transmission in advance of the data packet transmission (Step S901).

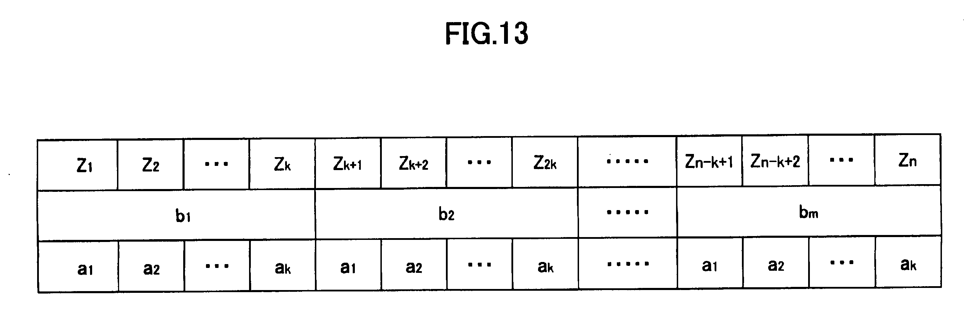

Specifying the communication quality is realized by associating a hierarchical code sequence with the communication quality. The reservation request signal includes the hierarchical code sequence that classifies communication quality levels required by data packet transmission. Specifically, the transceiver unit 120 of the mobile station 100 first selects one of signatures, which are binary short periodic-system sequences, as the identification information of the mobile station, and generates a repetition of the selected signature when generating the reservation request signal. Then, the transceiver unit 120 of the mobile station 100 reverses and un-reverses the sequence of every signature based on the communication quality (e.g., permitted delay time) required by the data packet transmission. Further, the transceiver unit 120 of the mobile station 100 transmits the reservation request signal to the cell 300 by a unique scrambling code in order to reduce interference from cells (other cells) corresponding to other base stations. Fig. 13 is a map showing a structure example of the reservation request signal that includes the code sequence hierarchically arranged. The reservation request signal shown here has a hierarchical structure that includes signatures {aₖ}, information {bₘ} about the communication quality required by the data packet transmission used by a process of reversing and un-reversing the signatures, and scrambling codes {Zₙ} unique to the cell 300. In this case, the base station 200 can identify the mobile station 100, and recognize the communication quality required by the data packet transmission of the mobile station 200 based on the received reservation request signal. Further, the base station 200 can demodulate the reservation request signal using only a short periodic-system sequence correlating unit and two or more integrating circuits. Accordingly, the burden of the demodulation process on the base station 200 is mitigated.

Alternatively, specifying the communication quality required by the data packet transmission can be realized by associating the communication quality required by the data packet transmission with the modulation technique of the reservation request signal. Specifically, the transceiver unit 120 of the mobile station 100 changes the modulation technique of the reservation request signal according to the communication quality required by the data packet transmission. In this case, the base station 200 can recognize the communication quality required by the data packet transmission of the mobile station 200 by recognizing the modulation technique corresponding to the demodulation method used for demodulating the reservation request signal that is received.

The transceiver unit 120 of the mobile station 100 adds an error detecting code to the reservation request signal, which specifies the communication quality required by the data packet transmission (Step S902). As the error detecting code, CRC (Cyclic Redundancy Check) bits are used, for example. By adding the error detecting code to the reservation request signal, the base station 200 can determine whether an error is present in the received reservation request signal, raising the reliability of the reservation request signal. In other words, the base station 200 can reliably recognize the communication quality required by the data packet transmission of the mobile station 100. In addition, when the transceiver unit 120 of the mobile station 100 specifies the communication quality required by the data packet transmission at Step S901, an error detecting code may be included to the reservation request signal.

Furthermore, the radio parameter control unit 110 of the mobile station 100 controls the radio parameter for the reservation request signal transmission according to the communication quality required by the data packet transmission (Step S903) In this case, the radio parameter control unit 110 of the mobile station 100 controls the radio parameter such that the system capacity is maximized, while satisfying the communication quality required by the data packet transmission.

Then, the transceiver unit 120 of the mobile station 100 transmits the reservation request signal, the radio parameter of which is controlled, to the base station 200 through the antenna 130. The transceiver unit 220 of the base station 200 receives the reservation request signal through the antenna 210 (Step S904).

Furthermore, the communication quality recognizing unit 230 of the base station 200 recognizes the communication quality required by the data packet transmission of the mobile station 100 based on the reservation request signal received by the transceiver unit 220 (Step S905). For example, when the reservation request signal includes a hierarchical code sequence as shown in Fig. 13, the communication quality recognizing unit 230 of the base station 200 can recognize the communication quality required by the data packet transmission of the mobile station 200 by performing the despreading by the scrambling code {Zₙ} unique to the cell 300, and by determining a state, reversed or un-reversed, of the signature {aₖ}. Alternatively, when the communication quality required by the data packet transmission and the modulation technique of the reservation request signal are associated, the communication quality recognizing unit 230 of the base station 200 can recognize the communication quality required by the data packet transmission of the mobile station 200 by recognizing the modulation technique corresponding to the demodulation method of the reservation request signal.

The radio parameter determining unit 240 of the base station 200 determines the radio parameter for the data packet transmission of the mobile station 100 according to the communication quality required by the data packet transmission of the mobile station 200 recognized by the communication quality recognizing unit 230 (Step S906). At this time, the radio parameter determining unit 240 of the base station 200 controls the radio parameter such that the system capacity is maximized, while providing the communication quality required by the data packet transmission of the mobile station 100. As the radio parameter, the coding rate of the error correcting code corresponding to the data packet, the modulation technique of the data packet, the number of multi-codes, the number of retransmission times, etc., can be used. In addition, the radio parameter determining unit 240 of the base station 200 can be configured to provide two or more candidates for the radio parameter. In this case, the radio parameter determining unit 240 of the base station 200 can be configured to generate information (radio parameter selection information) on which the radio parameter should be selected.

The transceiver unit 220 of the base station 200 transmits the radio parameter determined by the radio parameter determining unit 240 to the mobile station 100 through the antenna 210. At this time, the transceiver unit 220 of the base station 200 may include and transmit the radio parameter in the reservation reply signal. Alternatively, the transceiver unit 220 of the base station 200 may transmit the radio parameter apart from the reservation reply signal using an information channel. In addition, when the radio parameter determining unit 240 of the base station 200 provides two or more candidate radio parameters, the transceiver unit 220 may transmit the candidates. Furthermore, in the case that the radio parameter determining unit 240 of the base station 200 generates the radio parameter selection information, the transceiver unit 220 transmits the radio parameter selection information. The transceiver unit 120 of the mobile station 100 receives the radio parameter through the antenna 130. In addition, when the base station 200 transmits the radio parameter selection information, the transceiver unit 120 of the mobile station 100 receives the radio parameter selection information (Step S907).

The radio parameter control unit 110 of the mobile station 100 controls the radio parameter of the data packet transmission using the radio parameter received by the transceiver unit 120 (Step S908). In addition, when the transceiver unit 120 of the mobile station 100 receives two or more radio parameters, the radio parameter selecting unit 140 selects a radio parameter according to directions based on the radio parameter selection information generated by one of the mobile station 100 and the base station 200. Then, the radio parameter control unit 110 of the mobile station 100 controls the radio parameter of the data packet transmission using the radio parameter selected by the radio parameter selecting unit 140 (Step S908).

Next, the transceiver unit 120 of the mobile station 100 transmits the data packet, the radio parameter of which is controlled, to the base station 200 through the antenna 130. The transceiver unit 220 of the base station 200 receives the data packet through the antenna 210 (Step S909).

According to the present embodiment, the mobile station 100 provides information about the communication quality required by the data packet transmission to the base station 200, the base station 200 determines the radio parameter according to the communication quality, and provides the radio parameter to the mobile station 100. Further, the mobile station 100 controls the data packet transmission according to the radio parameter provided by the base station 200. That is, the base station 200 is capable of performing centralized control of radio parameters, and simply changing the radio parameters in operations, mitigating the processing burden of the mobile station 100.

Further, the present invention is not limited to these embodiments, but variations and modifications may be made without departing from the scope of the present invention.

## Claims

1. A mobile station (100) comprising:
a request signal radio parameter control unit (110) configured to control a radio parameter for transmitting a request signal that requests a communication to a base station (200) according to required communication quality;
a request signal transmitting unit (120) configured to transmit the request signal to the base station based on the radio parameter controlled by the request signal radio parameter control unit;
a reply signal receiving unit (120) configured to receive a reply signal from the base station in response to the request signal;
a data packet radio parameter control unit (110) configured to control the radio parameter when transmitting the data packet according to the required communication quality; and
a data packet transmitting unit (120) configured to transmit a data packet to the base station based on the radio parameter controlled by the data packet radio parameter control unit, when the reply signal is received by the reply signal receiving unit.

2. A mobile station as claimed in Claim 1, wherein the request signal transmitting unit is configured to transmit the request signal that specifies the required communication quality by either a hierarchical code sequence or an information modulation technique.

3. A mobile station as claimed in Claim 1, wherein the request signal transmitting unit is configured to transmit the request signal that contains an error detecting code.

## Patentansprüche

1. Mobilstation (100), welche aufweist:
eine Anforderungssignal-Funkparameter-Steuereinheit (110), die konfiguriert ist, einen Funkparameter zu steuern, um ein Anforderungssignal, welches eine Kommunikation anfordert, zu einer Basisstation (200) gemäß geforderter Kommunikationsqualität zu übertragen;
eine Anforderungssignal-Übertragungseinheit (120), welche konfiguriert ist, das Anforderungssignal zur Basisstation auf Basis des Funkparameters zu übertragen, der durch die Anforderungssignal-Funkparameter-Steuereinheit gesteuert wird;
eine Antwortsignal-Empfangseinheit (120), die konfiguriert ist, ein Antwortsignal von der Basisstation als Antwort auf das Anforderungssignal zu empfangen;
eine Datenpaket-Funkparameter-Steuereinheit (110), die konfiguriert ist, den Funkparameter zu steuern, wenn das Datenpaket gemäß der geforderten Kommunikationsqualität übertragen wird; und
eine Datenpaket-Übertragungseinheit (120), die konfiguriert ist, ein Datenpaket zur Basisstation auf Basis des Funkparameters zu übertragen, der durch die Datenpaket-Funkparameter-Steuereinheit gesteuert wird, wenn das Antwortsignal durch die Antwortsignal-Empfangseinheit empfangen wird.

2. Mobilstation nach Anspruch 1, wobei die Anforderungssignal-Übertragungseinheit konfiguriert ist, das Anforderungssignal, welches die geforderte Kommunikationsqualität spezifiziert, über entweder eine hierarchische Codesequenz oder ein Informationsmodulationsverfahren zu übertragen.

3. Mobilstation nach Anspruch 1, wobei die Anforderungssignal-Übertragungseinheit konfiguriert ist, das Anforderungssignal zu übertragen, welches einen Fehlererfassungscode enthält.

## Revendications

1. Station mobile (100) comprenant :
un module de contrôle de paramètre radio de signal de requête (110) configuré pour contrôler un paramètre radio en vue de la transmission d'un signal de requête qui sollicite une communication avec une station de base (200) en accord avec une qualité de communication requise ;
un module de transmission de signal de requête (120) configuré pour transmettre le signal de requête vers la station de base en se basant sur le paramètre radio contrôlé par le module de contrôle de paramètre radio de signal de requête ;
un module de réception de signal de réponse (120) configuré pour recevoir un signal de réponse en provenance de la station de base, en réponse au signal de requête ;
un module de contrôle de paramètre radio de paquet de données (110) configuré pour contrôler le paramètre radio lors de la transmission du paquet de données en accord avec la qualité de communication requise ; et
un module de transmission de paquet de données (120) configuré pour transmettre un paquet de données vers la station de base en se basant sur le paramètre radio contrôlé par le module de contrôle de paramètre radio de paquet de données, quand le signal de réponse est reçu par le module de réception de signal de réponse.

2. Station mobile selon la revendication 1, dans laquelle le module de transmission de signal de requête est configuré pour transmettre le signal de requête qui spécifie la qualité de communication requise, soit par une séquence de code hiérarchique, soit par une technique de modulation d'information.

3. Station mobile selon la revendication 1, dans laquelle le module de transmission de signal de requête est configuré pour transmettre le signal de requête qui contient un code de détection d'erreur.
